# EUROPEAN PATENT APPLICATION

(11) **EP 4 728 876 A1**
(43) Date of publication of application: **22.04.2026**
(21) Application number: 24206909.4
(22) Date of filing: 16.10.2024
(51) Int. Cl.: A23L 27/00, A23L 33/10, A23L 33/15, A23L 33/16, A47G 19/22, A47G 21/18

(54) **FOOD SUPPLEMENT SYSTEM AND USE**

(71) Applicant: air up group GmbH, 81671 München (DE)
(72) Inventor: JÜNGST, Magdalena, 81667 Munich (DE)
(74) Representative: Bardehle Pagenberg Partnerschaft mbB Patentanwälte Rechtsanwälte

(57) **Abstract**

The present invention relates to a food supplement system (1) comprising: a food supplement (2) comprising one or more nutritional components (3); and a flavor delivery device configured to deliver the food supplement (2) to a user; wherein the flavor delivery device (5) is configured such that a sensory perception of a predetermined flavor can be elicited in the user during delivery of the food supplement (2).

## Description

### Technical field

The present invention relates to a food supplement system comprising a food supplement and a flavor delivery device. The present invention also relates to a respective use of a food supplement.

### Technical background

In the field of nutritional supplements, it is common to encounter products that include added flavoring agents to make the consumption experience more pleasant. However, these added flavors can sometimes be undesirable for various reasons. For instance, the inclusion of flavoring agents can limit the flexibility of the supplement, as the flavor is inherently tied to the nutritional components.

Further, there are existing solutions of providing drinking liquids with flavor substances, which are described for instance in WO 202/2111808 A1 and EP 3 944 792 A1. WO 202/2111808 A1 discloses a drinking device for the retro-nasal olfaction of an aroma substance. EP 3 944 792 A1 discloses a drinking device consisting of a drinking straw with an inner flow channel and a flavor container connected to the drinking straw for adding a substance to a stream of air flowing out of the flavor container. The drinking device can be mounted on a drinking straw. The drinking device has a conical surface for the straw to slide in.

The known solutions make use of an aroma substance entering the user's mouth together with the drinking liquid. Subsequently, the aroma substance rises retro-nasally via the pharynx to the olfactory mucosa, where it is detected by the receptors located there and perceived by the user. The users therefore get the impression that they are tasting the aroma, although they only smell it retro-nasally.

The present invention aims to overcome the limitations that are inherent to the combination of the known nutritional supplements and the known drinking devices for the retro-nasal olfaction of an aroma substance.

Particularly, it is an object of the present invention to provide an improved approach to delivering nutritional supplements. It is a general objective to provide a food supplement system that can be used in a flexible manner according to the user's needs and preferences. It should be easy to use and cost-effective.

### Summary of the invention

The above-mentioned objects and other objects, which become apparent from the following description, are solved by the subject-matter of the independent claims. Preferred embodiments are subject of the dependent claims.

### Food supplement system

A **1^{st} embodiment** of the invention is directed to a food supplement system comprising: a food supplement comprising one or more nutritional components; and a flavor delivery device configured to deliver the food supplement to a user; wherein the flavor delivery device is configured such that a sensory perception of a predetermined flavor can be elicited in the user during delivery of the food supplement.

In this manner, an improved food supplement system is provided. The food supplement system can enhance the overall sensory experience, making the consumption of nutritional components more enjoyable. The system can incorporate a wide range of nutritional components, including vitamins, minerals, and amino acids. This versatility ensures that the system can be tailored to meet various dietary and nutritional needs.

As the sensory perception is of a predetermined flavor, this allows for a customizable user experience, catering to individual preferences. This is attributable to the flavor being a predetermined flavor. Hence, the user does not have to rely on a flavor provided by the food supplement. In preferred examples, the food supplement does not have a flavor. Accordingly, the present invention may have the advantage of separating nutritional benefits provided by the food supplement from the flavor providing means in the form of the flavor delivery device.

For example, the food supplement may include vitamins such as Vitamin C and Vitamin D. For example, the flavor delivery device can be a bottle with a unit providing an aroma source. Additionally, or alternatively, the flavor delivery device may comprise a mouth piece, such as a drinking straw, with an integrated aroma source. Further examples of the flavor delivery are encompassed in the present disclosure and some of these are described elsewhere herein.

The predetermined flavor may include but not limited to one or more of the following: Citrus Burst, Herbal Harmony, Spicy Chai, Vanilla Dream, Berry Bliss, Tropical Paradise, Cocoa Delight, Floral Essence, Earthy Spice, Ginger Zing, Lemon Lime, Peach, Raspberry, Coconut, Watermelon, Mango, Pineapple, Strawberry, Apple, and Elderflower.

The flavor delivery device may be a drinking vessel with an aroma pod or the like but is not limited thereto.

The food supplement system described in here may offer an enhanced user experience by allowing the user to perceive a predetermined flavor during the delivery of the food supplement. This may make the consumption of nutritional components more enjoyable, especially for those who may find the taste of traditional supplements unpleasant.

The flavor delivery device in the system is configured to elicit a sensory perception of a predetermined flavor, which can be customized according to user preferences. This flexibility may allow users to choose from a variety of flavors, making the supplement more appealing and easier to incorporate into their daily routine.

The pleasant sensory experience provided by the flavor delivery device can improve user compliance with their supplement regimen. When the supplement is enjoyable to consume, users are more likely to take it regularly, thereby ensuring they receive the intended nutritional benefits.

The system can be used with various forms of food supplements, such as dissolvable tablets, capsules, or powders. This versatility allows manufacturers to develop a wide range of products that cater to different consumer preferences and needs.

Since the flavor is delivered separately through the flavor delivery device, there may be no need to include flavoring agents in the nutritional components. This can reduce the risk of allergic reactions or sensitivities to certain flavoring agents, making the supplement suitable for a broader range of users.

The flavor delivery device is designed to elicit a sensory perception of flavor, which can be more intense and enjoyable compared to traditional flavored supplements. This enhanced sensory perception can make the supplement more appealing, especially for those who are sensitive to taste.

The food supplement may have a weight of at least 100 mg, preferably at least 200 mg, , preferably at least 400 mg, , preferably at least 600 mg, , preferably at least 700 mg, , preferably at least 1000 mg, , preferably at least 1200 mg, , preferably at least 1400 mg, preferably at least 1600 mg, preferably at least 1800 mg, preferably at least 2000 mg.

Additionally, or alternatively, food supplement may have a weight of at most 5000 mg, preferably at most 4500 mg, preferably at most 4000 mg, preferably at most 3500 mg, preferably at most 3000 mg, preferably at most 2800 mg, preferably at most 2600 mg, preferably at most 2400 mg, preferably at most 2200 mg, preferably at most 2000 mg.

### Use

A **2^{nd} embodiment** of the invention is directed to a use of a food supplement comprising one or more nutritional components in a flavor delivery device configured such that a sensory perception of a predetermined flavor can be elicited in the user during delivery of the food supplement to the user.

It is understood that all features and advantages set forth in relation to the food supplement system also apply to the use and vice versa. This applies even though it may not be expressly mentioned.

In particular, using such adapted food supplements, i.e., making them ready for use with a flavor delivery device is believed to constitute this beneficial effect of separating nutritional content and flavor.

The system and use of the present invention improve the prior art in several ways:
Traditional supplements often include taste-producing additives that may not be healthy. By enabling the possibility to reduce and/or eliminate these additives, the invention provides a purer, potentially healthier supplement.

Moreover, users can customize their taste experience independently of the supplement's nutritional content. This may not be possible with traditional supplements where taste and nutritional content are inseparable.

Furthermore, the invention allows users to select supplements based solely on their nutritional needs, without being influenced by taste preferences. This separation can lead to better adherence to nutritional regimens.

### General features

According to a **3^{rd} embodiment**, in the food supplement system according to embodiment 1 and the use according to embodiment 2, the flavor delivery device is configured such that the sensory perception can be elicited through the retronasal route of the user.

For example, the flavor delivery device may include a mechanism to release the aroma at the back of the mouth, and the retronasal route can be used to deliver a citrus flavor while consuming a magnesium supplement. The system may include a mouthpiece that directs the aroma to the nasal cavity during ingestion. The retronasal flavor delivery may be adjustable to provide different flavor intensities. The device may be designed to work with effervescent tablets that dissolve in water, releasing both the nutritional components and the aroma.

According to a **4^{th} embodiment**, in the food supplement system according to embodiment 1 or 3 and the use according to embodiment 2 or 3, the predetermined flavor that can be elicited in the user is substantially independent of the one or more nutritional components, preferably substantially independent of the food supplement.

By making the flavor independent of the one or more nutritional components, it may be understood that the flavor delivery is separate from the nutritional components. Thereby, the system may ensure that the taste does not interfere with the efficacy of the nutritional components. This separation may allow for a more controlled and consistent delivery of nutrients, which can be particularly beneficial for individuals with specific dietary needs or restrictions.

As an illustrative and non-limiting example, the system can be configured to deliver a Peach, Raspberry, Coconut, Watermelon, Mango, Pineapple, Strawberry, Apple, and/or Elderflower flavor with a protein supplement that has no inherent taste.

According to a **5^{th} embodiment**, in the food supplement system according to embodiments 1, 3 and 4 and the use according to embodiments 2 to 4, the one or more nutritional components comprise one or more of the following: vitamins, minerals, amino acids.

For example, the food supplement may include Vitamin B12, Zinc, and L-Arginine. The system can be used to deliver a combination of Calcium and Vitamin D with a berry flavor. The nutritional components may include essential amino acids such as Lysine and Methionine. The supplement can be formulated with Iron and Folic Acid, with the flavor delivery device providing a citrus flavor. The system may include a blend of vitamins and minerals, such as Vitamin E and Magnesium, with an independent flavor like chocolate or vanilla.

According to a **6^{th} embodiment**, in the food supplement system according to embodiments 1, and 3 to 5 and the use according to embodiments 2 to 5, the one or more nutritional components comprise one or more of the following: Cyanocobalamin, Thiamine hydrochloride, Pyridoxine hydrochloride, Calcium-D-pantothenate, Pteroylmonoglutamic acid, D-biotin, L-Ascorbic acid, Zinc citrate.

The inclusion of specific nutrients such as Cyanocobalamin, Thiamine hydrochloride, Pyridoxine hydrochloride, Calcium-D-pantothenate, Pteroylmonoglutamic acid, D-biotin, L-Ascorbic acid, and Zinc citrate ensures that the food supplement provides essential vitamins and minerals that are helpful for various metabolic and physiological functions.

It is to note that the one or more nutritional components may comprise any arbitrary combination of Cyanocobalamin, Thiamine hydrochloride, Pyridoxine hydrochloride, Calcium-D-pantothenate, Pteroylmonoglutamic acid, D-biotin, L-Ascorbic acid, and/or Zinc citrate. However, it was found that the combination of these six nutritional components has a specific advantage as they complement one another. Further, they cover six of eight of B-vitamins, which is appreciated by users.

The combination of L-Ascorbic acid (vitamin C), and Zinc citrate may have synergistic effects in supporting the immune system. In particular, the use of zinc citrate is notable due to its higher bioavailability compared to other zinc compounds. This increased bioavailability ensures that the zinc is more readily absorbed by the body, thereby enhancing its efficacy in immune support.

According to a **7^{th} embodiment**, in the food supplement system according to embodiments 1, and 3 to 6 and the use according to embodiments 2 to 6, the food supplement comprises one or more of the following components: Maltodextrin, Citric acid, Sodium hydrogen carbonate, Inulin, Sorbitol, Polyethylene glycol.

The inclusion of functional additives like Maltodextrin, Citric acid, Sodium hydrogen carbonate, Inulin, Sorbitol, and Polyethylene glycol can improve the physical properties of the supplement, such as solubility, stability, and palatability, making it more user-friendly and effective.

According to an **8^{th} embodiment**, in the food supplement system according to embodiments 1, and 3 to 7 and the use according to embodiments 2 to 7, the food supplement comprises the following components: Maltodextrin, Citric acid, Sodium hydrogen carbonate, Inulin, Sorbitol, and Polyethylene glycol, wherein the one or more nutritional components optionally comprise Cyanocobalamin, Thiamine hydrochloride, Pyridoxine hydrochloride, Calcium-D-pantothenate, Pteroylmonoglutamic acid, and D-biotin.

By specifying a combination of both nutritional components and functional additives, this embodiment ensures a balanced formulation that not only provides nutritional benefits but also enhances the overall user experience through improved taste and texture.

According to a **9^{th} embodiment**, in the food supplement system according to embodiments 1, and 3 to 8 and the use according to embodiments 2 to 8, the food supplement comprises the following components: Maltodextrin, Citric acid, Sodium hydrogen carbonate, Inulin, Sorbitol, and Polyethylene glycol, wherein the one or more nutritional components optionally comprise L-Ascorbic acid, and Zinc citrate.

This embodiment further refines the nutritional components, ensuring a balanced and effective supplement formulation that includes essential vitamins and minerals, thereby supporting overall health and well-being.

According to a **10^{th} embodiment**, in the food supplement system according to embodiments 1, and 3 to 9 and the use according to embodiments 2 to 9, the flavor delivery device is configured such that an intensity of the sensory perception of a predetermined flavor that can be elicited in the user can be adjusted.

For example, the flavor delivery device may include a mechanism to adjust the release rate of the aroma, allowing the user to control the flavor intensity. The system can be used to provide a mild or strong citrus flavor depending on user preference. The device may include settings to vary the intensity of a berry flavor. The flavor delivery system can be configured to provide adjustable flavors including but not limited to, e.g., mint or vanilla flavors.

Adjustability may allow users to control the intensity of the flavor according to their personal preference. This feature adds an extra layer of customization, making the supplement experience more tailored to individual needs.

According to an **11^{th} embodiment**, in the food supplement system according to embodiments 1, and 3 to 10 and the use according to embodiments 2 to 10, the flavor delivery device is configured such that a sensory perception of a plurality of predetermined flavors can be elicited in the user during delivery of the food supplement.

For example, the flavor delivery device may include a plurality of aroma sources to provide a combination of, e.g., citrus and berry flavors. Further, the system can be used to deliver a blend of mint and vanilla flavors. The device may be configured to provide alternating flavors, such as chocolate and coffee, during the consumption of the supplement. The flavor delivery system can be designed to offer a variety of herbal and sweet flavors. The device may allow the user to select from a range of predetermined flavors, enhancing the sensory experience.

The system being designed to offer a plurality of flavors provides users with a variety of options to choose from. This can prevent flavor fatigue and keep the supplement experience fresh and enjoyable over time.

In some examples, certain components may be excluded in the food supplement. This may ensure that the supplement can meet specific dietary or health requirements, such as allergen-free, vegan, or other dietary restrictions, thereby broadening its user attractiveness.

According to a **12^{th} embodiment**, in the food supplement system according to embodiments 1, and 3 to 11 and the use according to embodiments 2 to 11, the food supplement does not comprise any flavor-producing components.

Ensuring that the food supplement does not contain any flavor-producing components maintains the integrity and effectiveness of the flavor delivery device. Thereby, the desired flavor perception may be achieved solely through the device.

For example, the food supplement may be formulated to be completely tasteless, while the flavor delivery device provides the desired flavor.

The system may be used to deliver a supplement with no inherent taste, with the flavor delivery device providing a strong or mild flavor.

The nutritional components may be designed to be flavorless, with the device offering a variety of flavors.

The device may ensure that the food supplement remains free from any flavor-producing components, while still providing a pleasant sensory perception.

According to a **13^{th} embodiment**, in the food supplement system according to embodiments 1, and 3 to 12 and the use according to embodiments 2 to 12, the food supplement is provided in the form of a dissolvable food supplement, a powder, or a capsule, wherein the food supplement is preferably an effervescent tablet.

Offering the supplement in various forms such as dissolvable tablets, powders, or capsules provides flexibility in consumption methods, catering to different user preferences and making it easier to incorporate into daily routines.

For example, the food supplement may be provided as a dissolvable tablet that releases the nutritional components in water, with the flavor delivery device providing the flavor. The device may be designed to work with various forms of the food supplement, ensuring a consistent flavor experience.

According to a **14^{th} embodiment**, in the food supplement system according to embodiments 1, and 3 to 13 and the use according to embodiments 2 to 13, the flavor delivery device comprises at least one aroma source, in particular at least one aroma container.

The inclusion of an aroma source or container in the flavor delivery device enhances the sensory experience by providing a consistent and controlled release of aroma, which is helpful for eliciting the desired flavor perception.

According to a **15^{th} embodiment**, in the food supplement system according to embodiments 1, and 3 to 14 and the use according to embodiments 2 to 14, the flavor delivery device comprises a unit for providing an aroma from an aroma source to the user during delivery of the food supplement such that a sensory perception of a predetermined flavor can be elicited.

The presence of a dedicated unit for providing aroma ensures that the aroma is delivered effectively and consistently during the consumption of the food supplement, enhancing the overall sensory experience.

According to a **16^{th} embodiment**, in the food supplement system according to embodiments 1, and 3 to 15 and the use according to embodiments 2 to 15, the flavor delivery device comprises an adapter for a mouth piece, e.g., an adapter for a drinking straw, the adapter configured such that a drinking fluid, preferably a liquid such as water, can be provided to the user via the mouth piece, e.g., a drinking straw, and an aroma fluid can be provided to the mouth of the user.

The adapter for a mouth piece, e.g., an adapter for a drinking straw, that allows for the simultaneous delivery of a drinking fluid and aroma fluid provides a convenient and integrated solution for users, enhancing the ease of use and ensuring a seamless flavor delivery experience.

One or more exemplary flavor delivery devices may comprise one or more of the following features:
A traditional water bottle fitted with an aroma pod that allows users to enjoy flavored water, e.g., water without added sugars or calories.

A designed system for children featuring a spill-proof lid and pods, making it easy for kids to enjoy flavored water while learning hydration habits.

A portable drinking system equipped with an insulated design to keep beverages hot or cold, along with compatibility for aroma pods, e.g., ideal for on-the-go use.

A specially designed bottle with a squeeze feature and a wide mouth for easy cleaning, featuring a pod holder for active users who want hydration during workouts.

A system for home use that dispenses flavored water infused with the aroma from multiple pods, e.g., for gatherings and/or family use.

A system that combines the principles of infusing fruits or herbs with the aroma pods, allowing users to customize flavors while enjoying the aroma experience.

An advanced version equipped with sensors to track hydration levels and remind users to drink, integrated with pods for flavor enhancement.

A bottle designed to hold multiple aroma pods simultaneously, allowing users to mix and match flavors according to their preferences.

These different systems can cater to various lifestyles, preferences, and hydration needs while promoting enjoyable drinking experiences.

The term "substantially" as used in the present disclosure means that manufacturing tolerances are included. Thus, slight variations of dimensions, shapes, or the like deviating from their intended dimensions, shapes, or the like are encompassed. Thereby, the present disclosure is not limited to the precise dimensions, shapes, or the like mentioned in here.

### Brief description of the figures

In the following, preferred embodiments are described, by way of example only. Reference is made to the following accompanying figures:
- Fig. 1: illustrates shows a food supplement system according to an embodiment of the invention;
- Fig. 2: illustrates shows a food supplement according to an embodiment of the invention.

### Detailed description of preferred embodiments

### Definitions

The term "aroma source" or equivalents as used in the present disclosure may include materials that may be carried with the help of another fluid, such as air. For instance, the aroma source may be carried as particles. Additionally, or alternatively, the aroma source may volatilize. Thereby, a volatilized component in the form of an aerosol may be provided. The volatilized component may mix with another fluid, such as air.

The aroma source may include any material, in particular materials that contribute to scents like chocolate orange, bubble gum, blue raspberry, kola, watermelon, orangeade, apple, pineapple. Further, the aroma source may include materials that contribute to scents of fruit extracts, vanilla, coffee aroma compounds, tea essence, herbal infusions, spices, hops, malt extracts, wine aroma compounds, and carbonation aroma.

The aroma source may be provided in any desired form including but not limited to a solid, a liquid, a gel or a wax or any other suitable form. Said aroma source may also be a combination or a blend of materials.

The terms "one end", "the other end", "outer side", "upper", "above", "inner side", "under", "below", "horizontal", "coaxial", "central", "end" "part", "length", "outer end" etc., which indicate the orientation or positional relationship, are based on the orientation or positional relationship shown in the drawings.

The terms "upper", "above", "below", "under" and the like as used in the present invention to indicate a relative position in space are used for the purpose of facilitating explanation to describe a system, device, part, component and/or feature shown in the drawings relative to the relationship of another system, device, part, component and/or feature.

The term of the relative position in space may be intended to include different orientations of the system, device, part, component and/or feature other than those shown in the figures. For example, if the system, device, part, component and/or feature in the figure is turned over, the system, device, part, component and/or feature described as being "below" or "under" other systems, devices, parts, components and/or features will be "above" the other system, device, part, component and/or feature. Therefore, the exemplary term "below" can encompass both the above and below orientations.

### Embodiments shown in the figures

In the following, the invention is described with reference to the accompanying figures in more detail. However, the present invention can also be used in other embodiments not explicitly disclosed hereafter. As detailed below, the embodiments are compatible with each other, and individual features of one embodiment may also be applied to another embodiment.

Throughout the figures and description, the same reference numerals refer to the same elements, unless stated otherwise. The figures may not be drawn to scale, and the relative size, proportions, and depiction of elements in the figures may be exaggerated for the purpose of clarity, illustration, and convenience. The figures do not limit the scope of the claims but merely support the understanding of the invention.

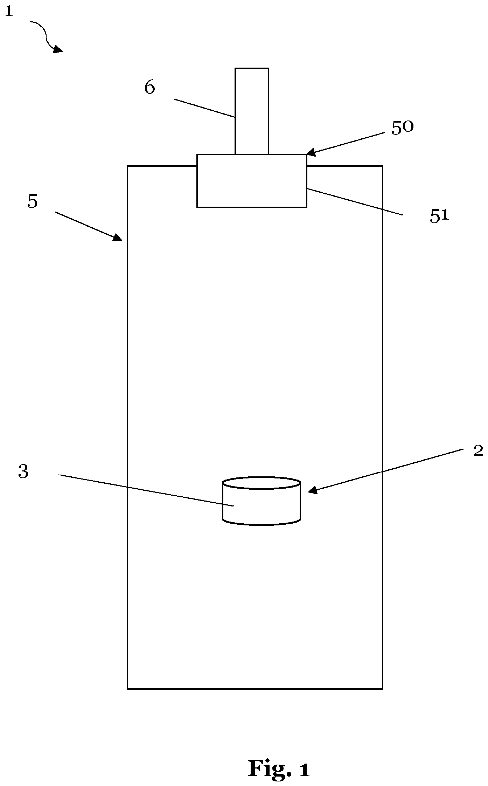

**Fig. 1** shows a food supplement system 1 comprising: a food supplement 2 comprising one or more nutritional components 3; and a flavor delivery device 5 configured to deliver the food supplement 2 to a user; wherein the flavor delivery device 5 is configured such that a sensory perception of a predetermined flavor can be elicited in the user during delivery of the food supplement 2.

Traditional food supplements typically combine both taste and nutritional content in a single product, and, thus, cannot provide a taste experience to a user independently of the food supplement. In particular, using such adapted food supplements, i.e., making them ready for use with a flavor delivery device is believed to constitute this beneficial effect of separating nutritional content and flavor.

Also, a use is encompassed by the present disclosure, i.e., a use of a food supplement 2 comprising one or more nutritional components 3 in a flavor delivery device 5 configured such that a sensory perception of a predetermined flavor can be elicited in the user during the delivery of the food supplement 2 to the user.

Features described with reference to the system 1 also constitute respective features of the use as understood.

The food supplement system 1 may be configured such that the flavor delivery device 5 elicits the sensory perception through the retronasal route of the user.

The food supplement system 1 may be configured such that the predetermined flavor elicited in the user is substantially independent of the one or more nutritional components 3, preferably substantially independent of the food supplement 2.

The food supplement system 1 may also include one or more nutritional components 3 comprising vitamins, minerals, and amino acids. In a specific embodiment, the nutritional components 3 may include Cyanocobalamin, Thiamine hydrochloride, Pyridoxine hydrochloride, Calcium-D-pantothenate, Pteroylmonoglutamic acid, D-biotin, L-Ascorbic acid, and Zinc citrate.

The food supplement 2 may comprise one or more of the following components: Maltodextrin, Citric acid, Sodium hydrogen carbonate, Inulin, Sorbitol, and Polyethylene glycol. In some embodiments, the food supplement 2 may include these components along with optional nutritional components 3 such as Cyanocobalamin, Thiamine hydrochloride, Pyridoxine hydrochloride, Calcium-D-pantothenate, Pteroylmonoglutamic acid, and D-biotin. Additionally, or alternatively, the food supplement 2 may include L-Ascorbic acid and Zinc citrate as optional nutritional components 3.

The flavor delivery device 5 may be configured such that the intensity of the sensory perception of a predetermined flavor can be adjusted. Additionally, or alternatively, the flavor delivery device 5 may be designed to elicit a sensory perception of a plurality of predetermined flavors during the delivery of the food supplement 2.

In some embodiments, the food supplement 2 may not comprise one or more specific components, such as XYZ., and/or any flavor-producing components.

The food supplement 2 may be provided in various forms, including a dissolvable food supplement, a powder, or a capsule, with a preference for an effervescent tablet. In the specific example of **Fig. 1**, the food supplement 2 may be an effervescent tablet.

As can be gathered from **Fig. 1**, the flavor delivery device 5 may comprise at least one aroma source 51, particularly at least one aroma container. The device may also include a unit 50 for providing an aroma from the aroma source 51 to the user during the delivery of the food supplement 2, thereby eliciting a sensory perception of a predetermined flavor.

Further, the flavor delivery device 5 may comprise an adapter for a mouth piece 6 (as can be seen in the upper part of Fig. 1), such as an adapter for a drinking straw. The adapter may be configured such that a drinking fluid, preferably a liquid such as water, can be provided to the user via the mouth piece 6, and an aroma fluid can be provided to the mouth of the user.

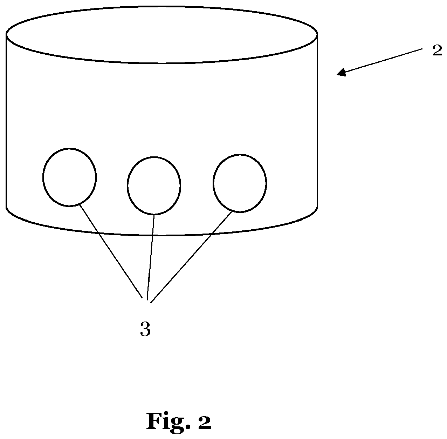

**Fig. 2** shows a food supplement 2 comprising one or more nutritional components 3 according to an embodiment of the present disclosure. The food supplement 2 may have the shape of an ordinary tablet.

The food supplement 2, in particular when being in the form of an effervescent tablet, can be manufactured in a variety of shapes to cater to different user preferences, packaging requirements, and branding strategies. Some possible shapes for effervescent tablets include:
Round tablets: round effervescent tablets are easy to produce and package. They dissolve uniformly in water and are convenient for consumers to handle.

Oval Tablets: Oval-shaped effervescent tablets offer a sleek design and can be easier to swallow if taken directly. They also provide a larger surface area for branding or labeling.

Square Tablets: Square effervescent tablets can stand out on the shelf and offer a unique aesthetic. They may also be easier to stack and package efficiently.

Rectangular Tablets: Similar to square tablets, rectangular effervescent tablets provide a distinctive look and can be designed to fit specific packaging formats.

Triangular Tablets: Triangular effervescent tablets can be used to create a unique brand identity. They may also dissolve quickly due to their shape.

Star-shaped Tablets: Star-shaped effervescent tablets are visually appealing and can be particularly attractive for children's supplements or special edition products.

Heart-shaped Tablets: Heart-shaped effervescent tablets target specific user grounds, e.g., health supplements.

Hexagonal Tablets: Hexagonal effervescent tablets offer a modern and geometric look. They can be stacked efficiently and provide a unique branding opportunity.

Custom Shapes: Effervescent tablets can also be manufactured in custom shapes to align with a brand's identity or to signify a particular product feature. For example, a company might produce effervescent tablets in the shape of their logo or a relevant symbol (e.g., a leaf for a natural supplement).

Embossed Tablets: Regardless of the overall shape, effervescent tablets can be embossed with logos, text, or patterns to enhance brand recognition and provide additional information to consumers.

Each shape of the food supplement 2 described in here has its own advantages in terms of manufacturing, packaging, and consumer appeal.

In the prior art, it has been shown that the technical problem of providing a healthier food supplement by eliminating taste-producing additives and offering a customizable taste experience has not even been addressed. The present disclosure has recognized this gap pertaining to the prior art and propose a system and a respective use that addresses this problem and overcomes the disadvantages of the prior art as shown further above.

It will be apparent to those skilled in the art that numerous modifications and variations of the described examples and embodiments are possible in light of the above teaching. The disclosed examples and embodiments are presented for purposes of illustration only. Other embodiments may include some or all of the features disclosed herein. Therefore, it is the intent to cover all such modifications and alternate embodiments as may come within the true scope of this invention.

### Examples of food supplements

A **first example** concerns a food supplement, which serves the purpose of increasing vitality:

| **Component** | **Type** | **Active components per food supplement** |
|---|---|---|
| Maltodextrin | Inactive | - |
| Citric acid | Inactive | - |
| Sodium hydrogen carbonate | Inactive | - |
| Inulin | Inactive | - |
| Sorbitol | Inactive | - |
| Polyethylene glycol | Inactive | - |
| Cyanocobalamin | Active | 2.5 µg Vitamin B12 |
| Thiamin hydrochloride | Active | 1.1 mg Vitamin B1 |
| Pyridoxine hydrochloride | Active | 1 mg Vitamin B6 |
| Calcium-D-pantothenate | Active | 1 mg Pantothenic acid |
| Pteroylmonoglutamic acid | Active | 200 µg Folic acid |
| D-biotin | Active | 50 µg Biotin |

A **second example** concerns a food supplement, which serves the purpose of increasing immunity:

| **Component** | **Type** | **Active components per food supplement** |
|---|---|---|
| Maltodextrin | Inactive | - |
| Citric acid | Inactive | - |
| Sodium hydrogen carbonate | Inactive | - |
| Inulin | Inactive | - |
| Sorbitol | Inactive | - |
| L-Ascorbic acid | Active | 150 mg Vitamin C |
| Polyethylene glycol | Inactive | - |
| Zinc citrate | Active | 5 mg Zinc |

It is understood that the mass of the respective active components per food supplement can vary depending on the respective use case.

The overall mass of the food supplement may be about 2000 mg, but different values are encompassed by the present disclosure as described elsewhere here in greater detail.

The active components in the food supplement system may be those that provide nutritional benefits to the user.

The inactive components in the food supplement system may be those that do not provide nutritional benefits. These may serve other purposes such as aiding in the delivery, stability, or palatability of the supplement.

Further examples of a food supplement of the present disclosure are the following:
1. A food supplement comprising Maltodextrin, Citric acid, Sodium hydrogen carbonate, Inulin, Sorbitol, and Polyethylene glycol, wherein the one or more nutritional components optionally comprise Cyanocobalamin.
2. A food supplement comprising Maltodextrin, Citric acid, Sodium hydrogen carbonate, Inulin, Sorbitol, and Polyethylene glycol, wherein the one or more nutritional components optionally comprise Thiamine hydrochloride.
3. A food supplement comprising Maltodextrin, Citric acid, Sodium hydrogen carbonate, Inulin, Sorbitol, and Polyethylene glycol, wherein the one or more nutritional components optionally comprise Pyridoxine hydrochloride.
4. A food supplement comprising Maltodextrin, Citric acid, Sodium hydrogen carbonate, Inulin, Sorbitol, and Polyethylene glycol, wherein the one or more nutritional components optionally comprise Calcium-D-pantothenate.
5. A food supplement comprising Maltodextrin, Citric acid, Sodium hydrogen carbonate, Inulin, Sorbitol, and Polyethylene glycol, wherein the one or more nutritional components optionally comprise Pteroylmonoglutamic acid.
6. A food supplement comprising Maltodextrin, Citric acid, Sodium hydrogen carbonate, Inulin, Sorbitol, and Polyethylene glycol, wherein the one or more nutritional components optionally comprise D-biotin.
7. A food supplement comprising Maltodextrin, Citric acid, Sodium hydrogen carbonate, Inulin, Sorbitol, and Polyethylene glycol, wherein the one or more nutritional components optionally comprise Cyanocobalamin and Thiamine hydrochloride.
8. A food supplement comprising Maltodextrin, Citric acid, Sodium hydrogen carbonate, Inulin, Sorbitol, and Polyethylene glycol, wherein the one or more nutritional components optionally comprise Cyanocobalamin and Pyridoxine hydrochloride.
9. A food supplement comprising Maltodextrin, Citric acid, Sodium hydrogen carbonate, Inulin, Sorbitol, and Polyethylene glycol, wherein the one or more nutritional components optionally comprise Cyanocobalamin and Calcium-D-pantothenate.
10. A food supplement comprising Maltodextrin, Citric acid, Sodium hydrogen carbonate, Inulin, Sorbitol, and Polyethylene glycol, wherein the one or more nutritional components optionally comprise Cyanocobalamin and Pteroylmonoglutamic acid.
11. A food supplement comprising Maltodextrin, Citric acid, Sodium hydrogen carbonate, Inulin, Sorbitol, and Polyethylene glycol, wherein the one or more nutritional components optionally comprise Cyanocobalamin and D-biotin.
12. A food supplement comprising Maltodextrin, Citric acid, Sodium hydrogen carbonate, Inulin, Sorbitol, and Polyethylene glycol, wherein the one or more nutritional components optionally comprise Thiamine hydrochloride and Pyridoxine hydrochloride.
13. A food supplement comprising Maltodextrin, Citric acid, Sodium hydrogen carbonate, Inulin, Sorbitol, and Polyethylene glycol, wherein the one or more nutritional components optionally comprise Thiamine hydrochloride and Calcium-D-pantothenate.
14. A food supplement comprising Maltodextrin, Citric acid, Sodium hydrogen carbonate, Inulin, Sorbitol, and Polyethylene glycol, wherein the one or more nutritional components optionally comprise Thiamine hydrochloride and Pteroylmonoglutamic acid.
15. A food supplement comprising Maltodextrin, Citric acid, Sodium hydrogen carbonate, Inulin, Sorbitol, and Polyethylene glycol, wherein the one or more nutritional components optionally comprise Thiamine hydrochloride and D-biotin.
16. A food supplement comprising Maltodextrin, Citric acid, Sodium hydrogen carbonate, Inulin, Sorbitol, and Polyethylene glycol, wherein the one or more nutritional components optionally comprise Pyridoxine hydrochloride and Calcium-D-pantothenate.
17. A food supplement comprising Maltodextrin, Citric acid, Sodium hydrogen carbonate, Inulin, Sorbitol, and Polyethylene glycol, wherein the one or more nutritional components optionally comprise Pyridoxine hydrochloride and Pteroylmonoglutamic acid.
18. A food supplement comprising Maltodextrin, Citric acid, Sodium hydrogen carbonate, Inulin, Sorbitol, and Polyethylene glycol, wherein the one or more nutritional components optionally comprise Pyridoxine hydrochloride and D-biotin.
19. A food supplement comprising Maltodextrin, Citric acid, Sodium hydrogen carbonate, Inulin, Sorbitol, and Polyethylene glycol, wherein the one or more nutritional components optionally comprise Calcium-D-pantothenate and Pteroylmonoglutamic acid.
20. A food supplement comprising Maltodextrin, Citric acid, Sodium hydrogen carbonate, Inulin, Sorbitol, and Polyethylene glycol, wherein the one or more nutritional components optionally comprise Calcium-D-pantothenate and D-biotin.
21. A food supplement comprising Maltodextrin, Citric acid, Sodium hydrogen carbonate, Inulin, Sorbitol, and Polyethylene glycol, wherein the one or more nutritional components optionally comprise Pteroylmonoglutamic acid and D-biotin.
22. A food supplement comprising Maltodextrin, Citric acid, Sodium hydrogen carbonate, Inulin, Sorbitol, and Polyethylene glycol, wherein the one or more nutritional components optionally comprise Cyanocobalamin, Thiamine hydrochloride, and Pyridoxine hydrochloride.
23. A food supplement comprising Maltodextrin, Citric acid, Sodium hydrogen carbonate, Inulin, Sorbitol, and Polyethylene glycol, wherein the one or more nutritional components optionally comprise Cyanocobalamin, Thiamine hydrochloride, and Calcium-D-pantothenate.
24. A food supplement comprising Maltodextrin, Citric acid, Sodium hydrogen carbonate, Inulin, Sorbitol, and Polyethylene glycol, wherein the one or more nutritional components optionally comprise Cyanocobalamin, Thiamine hydrochloride, and Pteroylmonoglutamic acid.
25. A food supplement comprising Maltodextrin, Citric acid, Sodium hydrogen carbonate, Inulin, Sorbitol, and Polyethylene glycol, wherein the one or more nutritional components optionally comprise Cyanocobalamin, Thiamine hydrochloride, and D-biotin.
26. A food supplement comprising Maltodextrin, Citric acid, Sodium hydrogen carbonate, Inulin, Sorbitol, and Polyethylene glycol, wherein the one or more nutritional components optionally comprise Cyanocobalamin, Pyridoxine hydrochloride, and Calcium-D-pantothenate.
27. A food supplement comprising Maltodextrin, Citric acid, Sodium hydrogen carbonate, Inulin, Sorbitol, and Polyethylene glycol, wherein the one or more nutritional components optionally comprise Cyanocobalamin, Pyridoxine hydrochloride, and Pteroylmonoglutamic acid.
28. A food supplement comprising Maltodextrin, Citric acid, Sodium hydrogen carbonate, Inulin, Sorbitol, and Polyethylene glycol, wherein the one or more nutritional components optionally comprise Cyanocobalamin, Pyridoxine hydrochloride, and D-biotin.
29. A food supplement comprising Maltodextrin, Citric acid, Sodium hydrogen carbonate, Inulin, Sorbitol, and Polyethylene glycol, wherein the one or more nutritional components optionally comprise Cyanocobalamin, Calcium-D-pantothenate, and Pteroylmonoglutamic acid.
30. A food supplement comprising Maltodextrin, Citric acid, Sodium hydrogen carbonate, Inulin, Sorbitol, and Polyethylene glycol, wherein the one or more nutritional components optionally comprise Cyanocobalamin, Calcium-D-pantothenate, and D-biotin.
31. A food supplement comprising Maltodextrin, Citric acid, Sodium hydrogen carbonate, Inulin, Sorbitol, and Polyethylene glycol, wherein the one or more nutritional components optionally comprise Cyanocobalamin, Pteroylmonoglutamic acid, and D-biotin.
32. A food supplement comprising Maltodextrin, Citric acid, Sodium hydrogen carbonate, Inulin, Sorbitol, and Polyethylene glycol, wherein the one or more nutritional components optionally comprise Thiamine hydrochloride, Pyridoxine hydrochloride, and Calcium-D-pantothenate.
33. A food supplement comprising Maltodextrin, Citric acid, Sodium hydrogen carbonate, Inulin, Sorbitol, and Polyethylene glycol, wherein the one or more nutritional components optionally comprise Thiamine hydrochloride, Pyridoxine hydrochloride, and Pteroylmonoglutamic acid.
34. A food supplement comprising Maltodextrin, Citric acid, Sodium hydrogen carbonate, Inulin, Sorbitol, and Polyethylene glycol, wherein the one or more nutritional components optionally comprise Thiamine hydrochloride, Pyridoxine hydrochloride, and D-biotin.
35. A food supplement comprising Maltodextrin, Citric acid, Sodium hydrogen carbonate, Inulin, Sorbitol, and Polyethylene glycol, wherein the one or more nutritional components optionally comprise Thiamine hydrochloride, Calcium-D-pantothenate, and Pteroylmonoglutamic acid.
36. A food supplement comprising Maltodextrin, Citric acid, Sodium hydrogen carbonate, Inulin, Sorbitol, and Polyethylene glycol, wherein the one or more nutritional components optionally comprise Thiamine hydrochloride, Calcium-D-pantothenate, and D-biotin.
37. A food supplement comprising Maltodextrin, Citric acid, Sodium hydrogen carbonate, Inulin, Sorbitol, and Polyethylene glycol, wherein the one or more nutritional components optionally comprise Thiamine hydrochloride, Pteroylmonoglutamic acid, and D-biotin.
38. A food supplement comprising Maltodextrin, Citric acid, Sodium hydrogen carbonate, Inulin, Sorbitol, and Polyethylene glycol, wherein the one or more nutritional components optionally comprise Pyridoxine hydrochloride, Calcium-D-pantothenate, and Pteroylmonoglutamic acid.
39. A food supplement comprising Maltodextrin, Citric acid, Sodium hydrogen carbonate, Inulin, Sorbitol, and Polyethylene glycol, wherein the one or more nutritional components optionally comprise Pyridoxine hydrochloride, Calcium-D-pantothenate, and D-biotin.
40. A food supplement comprising Maltodextrin, Citric acid, Sodium hydrogen carbonate, Inulin, Sorbitol, and Polyethylene glycol, wherein the one or more nutritional components optionally comprise Pyridoxine hydrochloride, Pteroylmonoglutamic acid, and D-biotin.
41. A food supplement comprising Maltodextrin, Citric acid, Sodium hydrogen carbonate, Inulin, Sorbitol, and Polyethylene glycol, wherein the one or more nutritional components optionally comprise Calcium-D-pantothenate, Pteroylmonoglutamic acid, and D-biotin.
42. A food supplement comprising Maltodextrin, Citric acid, Sodium hydrogen carbonate, Inulin, Sorbitol, and Polyethylene glycol, wherein the one or more nutritional components optionally comprise Cyanocobalamin, Thiamine hydrochloride, Pyridoxine hydrochloride, and Calcium-D-pantothenate.
43. A food supplement comprising Maltodextrin, Citric acid, Sodium hydrogen carbonate, Inulin, Sorbitol, and Polyethylene glycol, wherein the one or more nutritional components optionally comprise Cyanocobalamin, Thiamine hydrochloride, Pyridoxine hydrochloride, and Pteroylmonoglutamic acid.
44. A food supplement comprising Maltodextrin, Citric acid, Sodium hydrogen carbonate, Inulin, Sorbitol, and Polyethylene glycol, wherein the one or more nutritional components optionally comprise Cyanocobalamin, Thiamine hydrochloride, Pyridoxine hydrochloride, and D-biotin.
45. A food supplement comprising Maltodextrin, Citric acid, Sodium hydrogen carbonate, Inulin, Sorbitol, and Polyethylene glycol, wherein the one or more nutritional components optionally comprise Cyanocobalamin, Thiamine hydrochloride, Calcium-D-pantothenate, and Pteroylmonoglutamic acid.
46. A food supplement comprising Maltodextrin, Citric acid, Sodium hydrogen carbonate, Inulin, Sorbitol, and Polyethylene glycol, wherein the one or more nutritional components optionally comprise Cyanocobalamin, Thiamine hydrochloride, Calcium-D-pantothenate, and D-biotin.
47. A food supplement comprising Maltodextrin, Citric acid, Sodium hydrogen carbonate, Inulin, Sorbitol, and Polyethylene glycol, wherein the one or more nutritional components optionally comprise Cyanocobalamin, Thiamine hydrochloride, Pteroylmonoglutamic acid, and D-biotin.
48. A food supplement comprising Maltodextrin, Citric acid, Sodium hydrogen carbonate, Inulin, Sorbitol, and Polyethylene glycol, wherein the one or more nutritional components optionally comprise Cyanocobalamin, Pyridoxine hydrochloride, Calcium-D-pantothenate, and Pteroylmonoglutamic acid.
49. A food supplement comprising Maltodextrin, Citric acid, Sodium hydrogen carbonate, Inulin, Sorbitol, and Polyethylene glycol, wherein the one or more nutritional components optionally comprise Cyanocobalamin, Pyridoxine hydrochloride, Calcium-D-pantothenate, and D-biotin.
50. A food supplement comprising Maltodextrin, Citric acid, Sodium hydrogen carbonate, Inulin, Sorbitol, and Polyethylene glycol, wherein the one or more nutritional components optionally comprise Cyanocobalamin, Pyridoxine hydrochloride, Pteroylmonoglutamic acid, and D-biotin.
51. A food supplement comprising Maltodextrin, Citric acid, Sodium hydrogen carbonate, Inulin, Sorbitol, and Polyethylene glycol, wherein the one or more nutritional components optionally comprise Cyanocobalamin, Calcium-D-pantothenate, Pteroylmonoglutamic acid, and D-biotin.
52. A food supplement comprising Maltodextrin, Citric acid, Sodium hydrogen carbonate, Inulin, Sorbitol, and Polyethylene glycol, wherein the one or more nutritional components optionally comprise Thiamine hydrochloride, Pyridoxine hydrochloride, Calcium-D-pantothenate, and Pteroylmonoglutamic acid.
53. A food supplement comprising Maltodextrin, Citric acid, Sodium hydrogen carbonate, Inulin, Sorbitol, and Polyethylene glycol, wherein the one or more nutritional components optionally comprise Thiamine hydrochloride, Pyridoxine hydrochloride, Calcium-D-pantothenate, and D-biotin.
54. A food supplement comprising Maltodextrin, Citric acid, Sodium hydrogen carbonate, Inulin, Sorbitol, and Polyethylene glycol, wherein the one or more nutritional components optionally comprise Thiamine hydrochloride, Pyridoxine hydrochloride, Pteroylmonoglutamic acid, and D-biotin.
55. A food supplement comprising Maltodextrin, Citric acid, Sodium hydrogen carbonate, Inulin, Sorbitol, and Polyethylene glycol, wherein the one or more nutritional components optionally comprise Thiamine hydrochloride, Calcium-D-pantothenate, Pteroylmonoglutamic acid, and D-biotin.
56. A food supplement comprising Maltodextrin, Citric acid, Sodium hydrogen carbonate, Inulin, Sorbitol, and Polyethylene glycol, wherein the one or more nutritional components optionally comprise Pyridoxine hydrochloride, Calcium-D-pantothenate, Pteroylmonoglutamic acid, and D-biotin.
57. A food supplement comprising Maltodextrin, Citric acid, Sodium hydrogen carbonate, Inulin, Sorbitol, and Polyethylene glycol, wherein the one or more nutritional components optionally comprise Cyanocobalamin, Thiamine hydrochloride, Pyridoxine hydrochloride, Calcium-D-pantothenate, and Pteroylmonoglutamic acid.
58. A food supplement comprising Maltodextrin, Citric acid, Sodium hydrogen carbonate, Inulin, Sorbitol, and Polyethylene glycol, wherein the one or more nutritional components optionally comprise Cyanocobalamin, Thiamine hydrochloride, Pyridoxine hydrochloride, Calcium-D-pantothenate, and D-biotin.
59. A food supplement comprising Maltodextrin, Citric acid, Sodium hydrogen carbonate, Inulin, Sorbitol, and Polyethylene glycol, wherein the one or more nutritional components optionally comprise Cyanocobalamin, Thiamine hydrochloride, Pyridoxine hydrochloride, Pteroylmonoglutamic acid, and D-biotin.
60. A food supplement comprising Maltodextrin, Citric acid, Sodium hydrogen carbonate, Inulin, Sorbitol, and Polyethylene glycol, wherein the one or more nutritional components optionally comprise Cyanocobalamin, Thiamine hydrochloride, Calcium-D-pantothenate, Pteroylmonoglutamic acid, and D-biotin.
61. A food supplement comprising Maltodextrin, Citric acid, Sodium hydrogen carbonate, Inulin, Sorbitol, and Polyethylene glycol, wherein the one or more nutritional components optionally comprise Cyanocobalamin, Pyridoxine hydrochloride, Calcium-D-pantothenate, Pteroylmonoglutamic acid, and D-biotin.
62. A food supplement comprising Maltodextrin, Citric acid, Sodium hydrogen carbonate, Inulin, Sorbitol, and Polyethylene glycol, wherein the one or more nutritional components optionally comprise Thiamine hydrochloride, Pyridoxine hydrochloride, Calcium-D-pantothenate, Pteroylmonoglutamic acid, and D-biotin.
63. A food supplement comprising Maltodextrin, Citric acid, Sodium hydrogen carbonate, Inulin, Sorbitol, and Polyethylene glycol, wherein the one or more nutritional components optionally comprise Cyanocobalamin, Thiamine hydrochloride, Pyridoxine hydrochloride, Calcium-D-pantothenate, Pteroylmonoglutamic acid, and D-biotin.

### List of reference signs

- 1: food supplement system
- 2: food supplement
- 3: nutritional components
- 5: flavor delivery device
- 6: mouth piece
- 50: unit
- 51: aroma source

## Claims

1. A food supplement system (1) comprising:
a food supplement (2) comprising one or more nutritional components (3); and
a flavor delivery device configured to deliver the food supplement (2) to a user;
wherein the flavor delivery device (5) is configured such that a sensory perception of a predetermined flavor can be elicited in the user during delivery of the food supplement (2).

2. Use of a food supplement (2) comprising one or more nutritional components (3) in a flavor delivery device (5) configured such that a sensory perception of a predetermined flavor can be elicited in the user during delivery of the food supplement (2) to the user.

3. The food supplement system (1) according to claim 1 and the use according to claim 2, wherein the flavor delivery device (5) is configured such that the sensory perception can be elicited through the retronasal route of the user.

4. The food supplement system (1) according to claim 1 or 3 and the use according to claim 2 or 3, wherein the predetermined flavor that can be elicited in the user is substantially independent of the one or more nutritional components (3), preferably substantially independent of the food supplement (2).

5. The food supplement system (1) according to claims 1, 3 and 4 and the use according to claims 2 to 4, wherein the one or more nutritional components (3) comprise one or more of the following: vitamins, minerals, amino acids.

6. The food supplement system (1) according to claims 1, and 3 to 5 and the use according to claims 2 to 5, wherein the one or more nutritional components (3) comprise one or more of the following: Cyanocobalamin, Thiamine hydrochloride, Pyridoxine hydrochloride, Calcium-D-pantothenate, Pteroylmonoglutamic acid, D-biotin, L-Ascorbic acid, Zinc citrate.

7. The food supplement system (1) according to claims 1, and 3 to 6 and the use according to claims 2 to 6, wherein the food supplement (2) comprises one or more of the following components: Maltodextrin, Citric acid, Sodium hydrogen carbonate, Inulin, Sorbitol, Polyethylene glycol.

8. The food supplement system (1) according to claims 1, and 3 to 7 and the use according to claims 2 to 7, wherein the food supplement (2) comprises the following components: Maltodextrin, Citric acid, Sodium hydrogen carbonate, Inulin, Sorbitol, and Polyethylene glycol,
wherein the one or more nutritional components (3) optionally comprise Cyanocobalamin, Thiamine hydrochloride, Pyridoxine hydrochloride, Calcium-D-pantothenate, Pteroylmonoglutamic acid, and D-biotin.

9. The food supplement system (1) according to claims 1, and 3 to 8 and the use according to claims 2 to 8, wherein the food supplement (2) comprises the following components: Maltodextrin, Citric acid, Sodium hydrogen carbonate, Inulin, Sorbitol, and Polyethylene glycol,
wherein the one or more nutritional components (3) optionally comprise L-Ascorbic acid, and Zinc citrate.

10. The food supplement system (1) according to claims 1, and 3 to 9 and the use according to claims 2 to 9, wherein the flavor delivery device (5) is configured such that an intensity of the sensory perception of a predetermined flavor that can be elicited in the user can be adjusted.

11. The food supplement system (1) according to claims 1, and 3 to 10 and the use according to claims 2 to 10, wherein the flavor delivery device (5) is configured such that a sensory perception of a plurality of predetermined flavors can be elicited in the user during delivery of the food supplement (2).

12. The food supplement system (1) according to claims 1, and 3 to 11 and the use according to claims 2 to 11, wherein the food supplement (2) does not comprise any flavor-producing components.

13. The food supplement system (1) according to claims 1, and 3 to 12 and the use according to claims 2 to 12, wherein the food supplement (2) is provided in the form of a dissolvable food supplement, a power, or a capsule,
wherein the food supplement (2) is preferably an effervescent tablet.

14. The food supplement system (1) according to claims 1, and 3 to 13 and the use according to claims 2 to 13, wherein the flavor delivery device (5) comprises at least one aroma source (51), in particular at least one aroma container.

15. The food supplement system (1) according to claims 1, and 3 to 14 and the use according to claims 2 to 14, wherein the flavor delivery device (5) comprises a unit (50) for providing an aroma from an aroma source to the user during delivery of the food supplement (2) such that a sensory perception of a predetermined flavor can be elicited.
